(19) Europäisches Patentamt
European Patent Office
Office européen des brevets

(11) **EP 2 546 969 A1**

(12) **EUROPEAN PATENT APPLICATION**

(43) Date of publication:
**16.01.2013 Bulletin 2013/03**

(51) Int Cl.:
***H02M 5/458*** (2006.01)

(21) Application number: **11173989.2**

(22) Date of filing: **14.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventor: **Heng, Deng**
**7330 Brande (DK)**

(54) **Method for controlling a frequency converter and frequency converter**

(57)     A method for controlling a frequency converter (7) with a rectifier (11), an inverter (13) which is connected via a DC link (12) to the rectifier (11), a rectifier controller (14) and an inverter controller (15), has the following steps:
- determining a minimal rectifier DC link voltage for the rectifier controller (14);
- determining a minimal inverter DC link voltage for the inverter controller (15);
- determining a minimal DC link voltage as the maximum of the minimal rectifier DC link voltage and the minimal inverter DC link voltage;
- determining an optimal DC link voltage reference based on the minimum of the minimal DC link voltage and a maximal allowed DC link voltage; and
- controlling the rectifier controller (14) and/or the inverter controller (15) based on the optimal DC link voltage reference.

FIG 1

EP 2 546 969 A1

**Description**

The invention is generally directed to a method for controlling a frequency converter, to a frequency converter and to an electrical energy generating apparatus such as, for example a wind turbine. Moreover, the invention is directed to an electric motor. Particularly, the invention is directed towards optimisation of a DC link in a conversion of AC input power to AC output power.

Wind turbines convert wind energy into electrical energy by using the force of the wind to drive the rotor of a generator. The generator generates AC power having a frequency which depends on the rotational speed of the rotor i.e. to the wind force.

Frequency converters or power converters can be used to convert AC power with a variable frequency as provided by the generator of a wind turbine into AC power having the constant frequency of the grid. Usually such a frequency converter has a rectifier for conversion of the AC power to a DC power which is fed to a so called DC link. The DC link connects the rectifier with an inverter which converts the DC power to the AC power with grid frequency.

For the hardware of a low-voltage frequency converter the maximum allowed voltage may be higher than 1200V. The DC link voltage (Vdc) of a frequency converter is usually fixed to 1100V at all operating points by controlling the supply network or grid power or/and the generator power. The DC link voltage will determine the losses of the frequency converter and also of the generator. For example, the switching losses of a frequency converter are proportional to the square of the voltage of the DC link.

As long as the DC link voltage is high enough, all control targets of the generator side and the grid side can be achieved. The necessary or minimal DC link voltage can be determined by the generator voltage, the grid voltage, the generator current and the grid current.

For variable speed wind turbines the generator voltage, the generator current and the grid current are low at low wind speeds. The necessary DC link voltage at low wind speed conditions is much lower than 1100V. For example, if the grid voltage is 690V, the necessary DC link voltage for a 10% load is less than 1000V. In this case, the fixed DC link voltage increases unnecessary losses at the converter and the generator.

On the other hand, a fixed 1100V DC link voltage determines the maximum allowed rotor speed and power of the generator in full-load conditions. Therefore, transient over load and over speed of the wind turbine cannot be realised due to the limited fixed DC link voltage. The operating speed and power of the generator can be limited by the fixed DC link voltage as well.

It is an object of the invention to improve the conversion of power.

This object is solved according to the invention with the features of claims 1, 6 and 10, respectively.

In one aspect the invention is directed to a method for controlling a frequency converter with a rectifier, an inverter which is connected via a DC link to the rectifier, a rectifier controller and an inverter controller, having the following steps:

-    determining a minimal rectifier DC link voltage for the rectifier controller;
-    determining a minimal inverter DC link voltage for the inverter controller;
-    determining a minimal DC link voltage as the maximum of the minimal rectifier DC link voltage and the minimal inverter DC link voltage;
-    determining an optimal DC link voltage reference based on the minimum of the minimal DC link voltage and a maximal allowed DC link voltage; and
-    controlling the rectifier controller and/or the inverter controller based on the optimal DC link voltage reference.

The optimal DC link voltage reference could, for example, be determined as the minimum of the minimal DC link voltage and a maximal allowed DC link voltage. However, the optimal DC link voltage reference could also be determined in different ways. For example, the optimal dc link voltage reference could be some margin added to minimum of the minimal dc link voltage and a maximal allowed dc link voltage.

The control method improves efficiency and operating range of the frequency converter and connected generators like in a wind turbine by adjusting the voltage reference of the DC link. This can be done based on operating points of the frequency converter, of the generator and/or of the wind turbine. The DC link voltage can be controlled from the rectifier or generator side and/or from the inverter or grid side. The rectifier controller and/or the inverter controller can be controlled directly or indirectly via another controller or computer.

With the method according to the invention a varying DC link voltage is achieved. The voltage range can for example be between 950 to 1200 V which can depend on the hardware design. The method improves the efficiency of the converter and of a connected generator. The annual energy production of the system like a wind turbine, for example can be increased while cooling costs can be reduced. The operating range of a wind turbine is increased and overload situations or power boost functions can be realised due to the varying DC link voltage.

The determination may be based on current operating conditions. This is beneficial in particular for controllers with inner current loops.

The frequency converter may connect a generator or an electric motor with a supply network. This setup like for example in wind turbines benefits from the method. The parts of this system can be connected directly or indirectly via, for example filters, detection units and measurement devices or the like.

The optimal DC link voltage reference may be determined at a rate slower than a bandwidth of the controller. The bandwidth can be the bandwidth of the rectifier controller, of the inverter controller and/or of the DC link control in general. The term controller encompasses all units which take part in the control of the DC link voltage. This slower rate guarantees the stability of the control loop.

The current of the rectifier controller and/or the inverter controller may be controlled. Alternatively the voltage or the power can be controlled. Usually a current controller is the inner loop of the controllers so that a control of the current is easy to implement.

In a second aspect the invention is directed to a frequency converter for conversion of an AC input power to an AC output power, comprising a rectifier, a DC link in communication with the rectifier, an inverter in communication with the DC link, a rectifier controller, an inverter controller and a DC link voltage controller, wherein the DC link voltage controller comprises inputs for the voltages and the currents of the AC input power and of the AC output power and a reference output in communication with the rectifier controller and/or the inverter controller for outputting an optimal DC link voltage reference and wherein the DC link voltage controller produces the optimal DC link voltage reference on the basis of the voltages and the currents of the AC input power and of the AC output power. The same modifications and advantages as described above apply here. The rectifier can be part of or can be a generator bridge which in normal operation operates as a rectifier. The inverter can be part of or can be a grid or network bridge which in normal operation operates as an inverter.

The DC link voltage controller may be arranged in the rectifier controller and/or in the inverter controller. It can be chosen if the DC link voltage is controlled from the generator side, the grid side or from both sides. Locating the DC link voltage controller inside these controllers has the benefit of short signal transmission and easy implementation. Of course it can be located in another controller like for example a wind turbine controller.

The DC voltage controller may comprise an input for a power of the AC input power, for a torque of the generator, for an angular velocity of the generator and/or for a power of the AC output power. These further inputs can enhance reliability of control.

The frequency converter may comprise a rectifier current controller and/or an inverter current controller, wherein the reference output of the DC link voltage controller may be in communication with the rectifier current controller and/or the inverter current controller. The communication may be direct or indirect for example via the rectifier controller and/or an inverter controller or another controller.

In a further aspect the invention is directed to an electrical energy generating apparatus comprising a frequency converter as described above. The same modifications and advantages as described above apply here.

The electrical energy generating apparatus may comprise an electrical generator for generating AC power. The converter is beneficial in the combination with a generator.

Besides electrical energy generating apparatus like an electrical generator for generating AC power, the proposed method for controlling dc link voltage can also be used for a frequency converter for driving an electric motor. In a still further aspect the invention is therefore directed to an electric motor comprising a frequency converter as described above. The same modifications and advantages as described above apply here.

The electrical energy generating apparatus may be a wind turbine. The proposed invention is beneficial especially for wind turbines which have a generator with varying load depending on the wind force.

The accompanying drawings are included to provide a further understanding of embodiments. Other embodiments and many of the intended advantages will be readily appreciated as they become better understood by reference to the following detailed description. The elements of the drawings do not necessarily scale to each other. Like reference numbers designate corresponding similar parts.

Fig. 1 illustrates a schematic view of the electrical equipment of a wind turbine with a frequency converter according to the invention.

Fig. 2 illustrates a first implementation of a method for controlling a frequency converter according to the invention.

Fig. 3 illustrates a second implementation of a method for controlling a frequency converter according to the invention.

In the following detailed description, reference is made to the accompanying drawings which form a part hereof and in which are shown by way of illustration specific embodiments in which the invention may be practised. In this regard, directional terminology, such as "top" or "bottom" etc. is used with reference to the orientation of the Figure(s) being described. Because components of embodiments can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

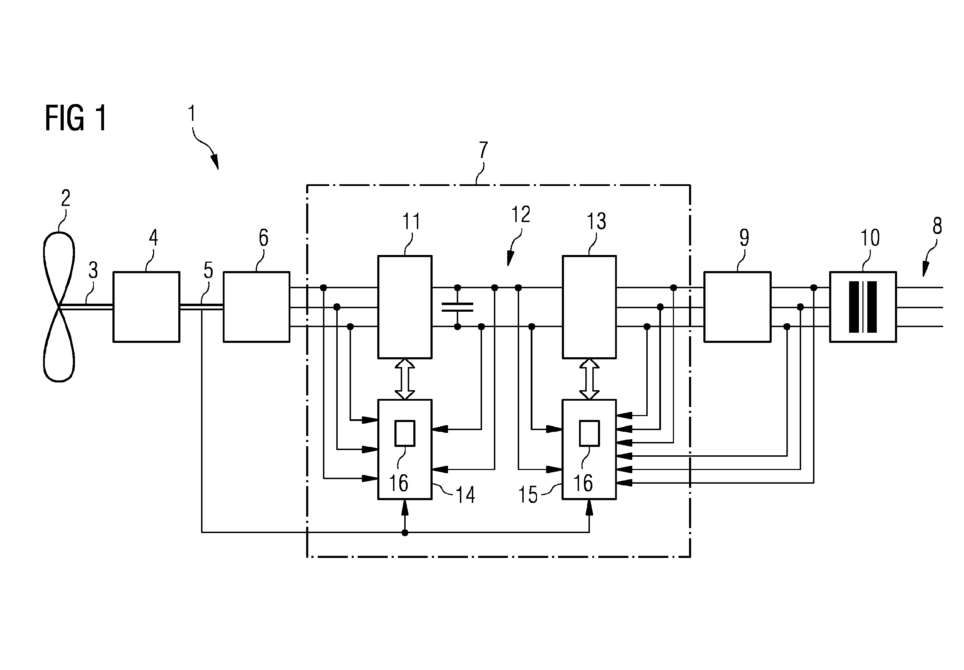

Figure 1 shows an overview of the electrical components of an electrical energy generating apparatus like for example a wind turbine 1. The wind turbine 1 has a rotor 2 with one or more, usually three blades. The rotor 2 is arranged on a rotor shaft 3 which transmits the rotational momentum from the turning rotor 2 to a gearbox 4. The gearbox 4 transmits the rotation of the rotor shaft 3 to an output shaft 5 with a defined transmission ratio. For direct drive wind turbines no gearbox is needed. In this case the output shaft and the rotor shaft are the same. The output shaft 5 is connected to a generator 6 which transforms the rotational power of the shaft 5 into electrical AC power. The generator 6 can be a synchronous or an asynchronous generator of a single fed or double fed type. The generator 6 is a variable speed generator so that its rotational speed can vary depending on the wind conditions.

A frequency converter or power converter 7 is in communication with outputs of the generator 6. The frequency converter 7 provides a fixed frequency to a supply network or (utility) grid 8. The frequency converter 7 converts parts or the whole of the electrical AC input power having a varying frequency delivered by the generator 6 into an electrical AC output power having a fixed frequency compatible with the grid 8. Furthermore, the frequency converter 8 can control the output power of the wind turbine 1. The output of the frequency converter 7 is connected to a filter 9 which can be realised by inductors or the like and further to a transformer 10 which transforms the AC output power of the frequency converter 7 to the level of the grid 8.

The converter 7 has a rectifier or generator bridge 11, inputs of which are connected to the outputs of the generator 6. The rectifier 11 converts AC power into DC power and puts it out onto a DC link 12. The DC link 12 connects an inverter or grid bridge 13 with the rectifier 11. The inverter 13 converts DC power into AC power having a frequency matching to the fixed frequency of the grid 8.

A rectifier or generator controller 14 is connected to the rectifier 11. The controller 14 can also be integrated in the rectifier 11 or in another controller or unit. The connection between the rectifier 11 and its controller 14 can be one or bidirectional. The rectifier controller 14 has inputs for the AC power from the generator 6 and for the DC power from the DC link bridge 12. Further inputs are for a torque of the AC input power or of the generator 6 and for an angular velocity of the AC input power, the shaft 5 or the generator 6.

An inverter or grid controller 15 is connected to the inverter 13. The controller 15 can also be integrated in the inverter 13 or in another controller or unit. The connection between the inverter 13 and its controller 15 can be one or bidirectional. The inverter controller 15 has inputs for the DC power from the DC link bridge 12, for the AC power from the inverter 13 and for the AC power from the grid 8. Further inputs are for a torque of the AC input power or of the generator 6 and for an angular velocity of the AC input power, the shaft 5 or the generator 6.

A DC link voltage controller 16 for controlling or adjusting the voltage on the DC link 12 is arranged in the rectifier controller 14 and/or in the inverter controller 15. The DC link voltage controller 16 can also be located in another controller or it can be a single dedicated controller. Here, two DC link voltage controllers 16 are shown. An implementation with a single DC link voltage controller 16 can be used as well.

The DC link voltage controller 16 is present in the control system to calculate an optimal DC link voltage reference based on current operating conditions of the converter 7, the generator 6, the grid 8 and/or the wind turbine 1. A necessary DC link voltage is the minimum DC link voltage necessary to control generator 6 and grid 8. This necessary DC link voltage can be calculated by using some linear equations as below and measured/calculated variables of the wind turbine 1 such as generator voltage/generator speed, generator power/current, grid voltage and grid power/current.

The minimum or necessary DC link voltage for the rectifier or generator controller 14 can be determined or calculated by the DC link voltage controller 16 according to the following formula:

$$V_{\min GEN} = R_S I_{GEN} + L_S \frac{dI_{GEN}}{dt} + U_{GEN}$$

where $R_s$ represents the resistance of the stator winding, $L_s$ represents the inductance of the stator winding, $I_{GEN}$ represents the generator current and $U_{GEN}$ represents the generator voltage.

The minimum or necessary DC link voltage for the inverter or grid controller 15 can be determined or calculated according to the following formula:

$$V_{\min GRID} = R_g I_{GRID} + L_g \frac{dI_{GRID}}{dt} + U_{GRID}$$

where Rg represents the resistance of the grid, Lg represents the inductance of the grid, $I_{GRID}$ represents the grid current and $U_{GRID}$ represents the grid voltage.

The minimum or necessary DC link voltage (for the DC link) can be determined or calculated according to the following formula:

$$V_{\min DC} = \max(V_{\min GEN}, V_{\min GRID})$$

Finally, the optimal DC link voltage reference can be determined or calculated according to the following formula

$$V_{DCREF} = \min(V_{\min DC}, V_{DCMAX})$$

according to which the reference is set to the minimum of the minimum or necessary DC link voltage and of the maximal allowed DC link voltage. This step enhances the security of operation and can be omitted for example when provisions are made to protect the DC link against too high voltages.

The DC link voltage reference is then used to set the DC link voltage to a desired point or range. The DC link voltage can be adjusted in a range of approximately 950 to 1200 V depending on the employed hardware and/or the desired or allowed operating conditions.

The update rate of the DC link voltage reference is normally slower than the bandwidth of the DC link control.

The DC link voltage reference can be communicated to a current controller of the rectifier controller 14 and/or of the inverter controller 15. The DC link voltage controller 16 can be integrated in such a current controller. Usually, the current controller forms an inner loop of the rectifier controller 14 and/or of the inverter controller 15.

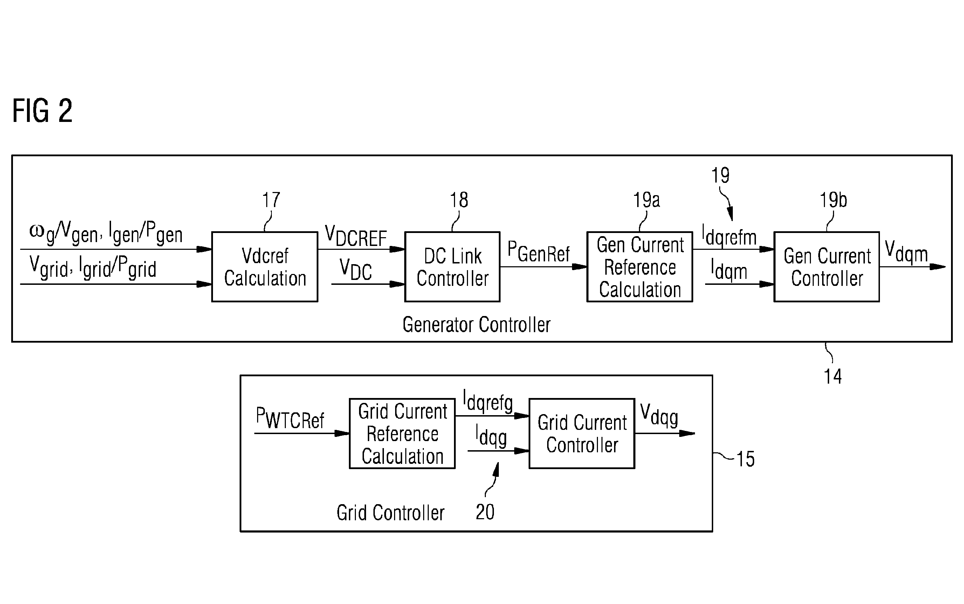

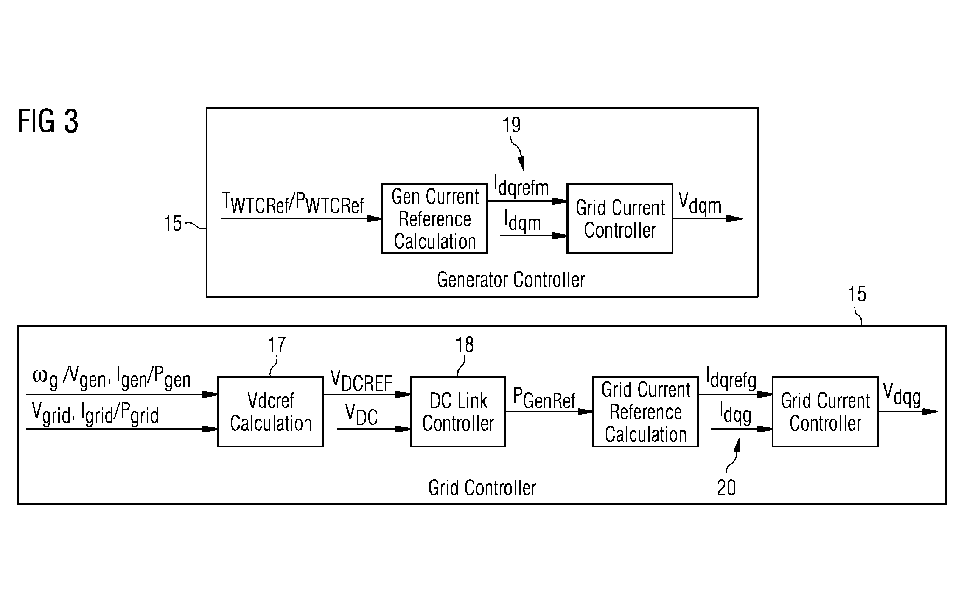

Figures 2 and 3 show implementations of the rectifier or generator controller 14 and of the inverter or grid controller 15 in which the DC link voltage controller 16 is integrated. The DC link voltage controller 16 can be implemented in hardware and/or in software. The DC link voltage can be controlled from the generator side or from the grid side.

Figure 2 shows a controller in which the DC link voltage control is integrated in the generator controller 14. The general terms "controller" or "DC link voltage control" encompass all control devices which take part in the control of the DC link voltage.

The generator controller 14 receives inputs as the AC input power, current and voltage from the generator 6 and an angular velocity of the AC input power or the generator 6. In a Vdcref calculation unit 17 the reference voltage for the DC link $V_{DCREF}$ is calculated based on some or all of the inputs and is communicated to a DC link controller 18. The reference voltage can be calculated according to the above equations.

The DC link controller 18 additionally receives the actual DC link voltage $V_{DC}$ and calculates the generator power reference $P_{GenRef}$. The generator or wind turbine power is controlled by a generator current controller 19 to follow this reference power. The generator current controller 19 is the inner loop of the generator controller 14.

The abovementioned DC link voltage controller 16 can consist of the Vdcref calculation unit 17 or of the combination of the Vdcref calculation unit 17 with the DC link controller 18 and/or the generator current controller 19 (either the actual current controller 19b itself and/or the reference calculation for the current 19a).

The grid controller 15 receives for example from a wind turbine controller a turbine power reference $P_{WTCRef}$. Here, only the grid current controller 20 of the grid controller 15 is depicted as only these parts are needed for this example. Further parts of the of the grid controller 15 are not shown for the sake of simplicity. The grid current controller 20 controls the generator power to follow the turbine power reference.

Figure 3 shows an implementation where the DC link voltage is controlled from the grid side. Accordingly, the DC link controller 18 is located in the grid controller 15.

The grid controller 15 receives inputs as the AC input power, current and voltage from the generator 6 and an angular velocity of the AC input power or the generator 6. In a Vdcref calculation unit 17 the reference voltage for the DC link VDCREF is calculated based on some or all of the inputs and is communicated to a DC link controller 18. The reference voltage can be calculated according to the above equations.

The DC link controller 18 additionally receives the actual DC link voltage VDC and calculates the grid power reference $P_{GridRef}$. The generator or wind turbine power is controlled by a grid current controller 20 to follow this reference power. The grid current controller 20 is the inner loop of the generator controller 14.

The abovementioned DC link voltage controller 16 can consist of the Vdcref calculation unit 17 or of the combination of the Vdcref calculation unit 17 with the DC link controller 18 and/or the grid current controller 20 (either the actual current controller 20b itself and/or the reference calculation for the current 20a).

The generator controller 14 receives for example from a wind turbine controller a turbine power reference $P_{WTCRef}$ and/or a torque reference $T_{WTCRef}$. Here, only the generator current controller 19 of the generator controller 14 is depicted as only these parts are needed for this example. Further parts of the of the generator controller 14 are not shown for the sake of simplicity. The generator current controller 19 controls the generator power to follow the turbine power and/or torque reference.

Control of the DC link voltage can be achieved from both sides i.e. from generator and from grid side as well. In this case the generator controller 14 is structured like the one shown in Figure 2 while the grid controller 15 is structured like the one shown in Figure 3.

**Claims**

1. Method for controlling a frequency converter (7) with a rectifier (11), an inverter (13) which is connected via a DC link (12) to the rectifier (11), a rectifier controller (14) and an inverter controller (15), having the following steps:

    - determining a minimal rectifier DC link voltage for the rectifier controller (14);
    - determining a minimal inverter DC link voltage for the inverter controller (15);
    - determining a minimal DC link voltage as the maximum of the minimal rectifier DC link voltage and the minimal inverter DC link voltage;
    - determining an optimal DC link voltage reference based on the minimum of the minimal DC link voltage and a maximal allowed DC link voltage; and
    - controlling the rectifier controller (14) and/or the inverter controller (15) based on the optimal DC link voltage reference.

2. Method according to claim 1, wherein the determination is based on current operating conditions.

3. Method according to claim 1 or 2, wherein the frequency converter (7) connects a generator (6) or a motor with a supply network (8).

4. Method according to any one of claims 1 to 3, wherein the optimal DC link voltage reference is determined at a rate slower than a bandwidth of the controller.

5. Method according to any one of claims 1 to 4, wherein the current of the rectifier controller (14) and/or the inverter controller (15) is controlled.

6. Frequency converter for conversion of an AC input power to an AC output power, comprising a rectifier (11), a DC link (12) in communication with the rectifier (11), an inverter (13) in communication with the DC link (12), a rectifier controller (14), an inverter controller (15) and a DC link voltage controller (16), wherein the DC link voltage controller (16) comprises inputs for the voltages and the currents of the AC input power and of the AC output power and a reference output in communication with the rectifier controller (14) and/or the inverter controller (15) for outputting an optimal DC link voltage reference and wherein the DC link voltage controller (16) produces the optimal DC link voltage reference on the basis of the voltages and the currents of the AC input power and of the AC output power.

7. Frequency converter according to claim 6, wherein the DC link voltage controller (16) is arranged in the rectifier controller (14) and/or in the inverter controller (15).

8. Frequency converter according to claim 6 or 7, wherein the DC voltage controller (16) comprises an input for a power of the AC input power, for a torque of the generator, for an angular velocity of the generator and/or for a power of the AC output power.

9. Frequency converter according to any one of claims 6 to 8, comprising a rectifier current controller (19) and/or an inverter current controller (20), wherein the reference output of the DC link voltage controller (16) is in communication with the rectifier current controller (19) and/or the inverter current controller (20).

10. Electrical energy generating apparatus comprising a frequency converter (7) according to any one of claims 6 to 9.

11. Electrical energy generating apparatus according to claim 10, comprising an electrical generator (6) for generating AC power.

12. Electrical energy generating apparatus according to claim 10 or 11, wherein it is a wind turbine (1).

13. Electric motor comprising a frequency converter (7) according to any one of claims 6 to 9.

FIG 1

EP 2 546 969 A1

# FIG 2

EP 2 546 969 A1

EP 2 546 969 A1

FIG 3

**Generator Controller**

$15$ — $T_{WTCRef}/P_{WTCRef}$ → Gen Current Reference Calculation → $I_{dqrefm}$ → Grid Current Controller → $V_{dqm}$

$I_{dqm}$

$19$

**Grid Controller**

$\omega_g/N_{gen}, I_{gen}/P_{gen}$

$V_{grid}, I_{grid}/P_{grid}$ → Vdcref Calculation → $V_{DCREF}$ → DC Link Controller → $P_{GenRef}$ → Grid Current Reference Calculation → $I_{dqrefg}$ → Grid Current Controller → $V_{dqg}$

$V_{DC}$

$I_{dqg}$

$17$   $18$   $20$   $15$

Europäisches
Patentamt

European
Patent Office

Office européen
des brevets

# EUROPEAN SEARCH REPORT

Application Number

EP 11 17 3989

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2010/088979 A1 (SIEMENS AG [DE]; DILLIG REINHOLD [DE]; HERRMANN BERND [DE]; SCHWINN TH) 12 August 2010 (2010-08-12) * page 5, line 20 - page 8, line 19; figures 2-3 * ----- | 1-13 | INV. H02M5/458 |
| Y | DE 199 31 199 A1 (DAIMLER CHRYSLER AG [DE]) 18 January 2001 (2001-01-18) * column 4, line 40 - column 5, line 50; figure 1 * ----- | 1-13 | |

TECHNICAL FIELDS
SEARCHED        (IPC)

H02M

The present search report has been drawn up for all claims

| Place of search | Date of completion of the search | Examiner |
|---|---|---|
| Munich | 9 December 2011 | Kruip, Stephan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 17 3989

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2011

| Patent document cited in search report | | Publication date | Patent family member(s) | | Publication date |
|---|---|---|---|---|---|
| WO 2010088979 | A1 | 12-08-2010 | DE 102009008048 | A1 | 19-08-2010 |
| | | | WO 2010088979 | A1 | 12-08-2010 |
| DE 19931199 | A1 | 18-01-2001 | AT 406282 | T | 15-09-2008 |
| | | | CA 2343247 | A1 | 18-01-2001 |
| | | | CZ 20011061 | A3 | 16-01-2002 |
| | | | DE 19931199 | A1 | 18-01-2001 |
| | | | EP 1112196 | A1 | 04-07-2001 |
| | | | ES 2312353 | T3 | 01-03-2009 |
| | | | JP 2003505002 | A | 04-02-2003 |
| | | | PL 346468 | A1 | 11-02-2002 |
| | | | RU 2183570 | C1 | 20-06-2002 |
| | | | US 6538412 | B1 | 25-03-2003 |
| | | | WO 0103965 | A1 | 18-01-2001 |

EPO FORM P0459

For more details about this annex : see Official Journal of the European Patent Office, No. 12/82